# EUROPEAN PATENT APPLICATION

(11) **EP 1 964 478 A1**
(43) Date of publication of application: **03.09.2008**
(21) Application number: 08151154.5
(22) Date of filing: 07.02.2008
(51) Int. Cl.: A23G 3/28, A23G 3/00

(54) **Process for making chocolate products with printed images**

(30) Priority: 09.02.2007 IT TO20070097
(71) Applicant: Dominic & Star Company S.r.l., 10041 Carignano (Torino) (IT)
(72) Inventor: Curto, Niccolò, 10128, Torino (IT)
(74) Representative: Buzzi, Franco

(57) **Abstract**

A process for making chocolate products having at least one printed image comprising:
- forming a layer of substantially transparent wafer having opposite front and rear sides;
- printing with edible ink said at least one image on the front side of said layer of wafer;
- inserting said layer of wafer having said at least one image within a mould, the rear side of said layer of wafer being set against a portion of wall of said mould;
- spraying a fluid compound containing white chocolate and titanium dioxide on said front side of said layer of wafer;
- pouring liquid chocolate into said mould;
- once the chocolate is solidified, removing the aforesaid chocolate product obtained from the mould.

## Description

### Field of the invention

The subject of the present invention is a process for making chocolate products having at least one printed image.

### State of the prior art

The decoration of chocolate products with coloured images is still prevalently carried out using non-industrial techniques, in which the decorations are made by hand on the individual products. In this context, multiple limitations are encountered both as regards the number of products that can be produced and as regards the degree of complexity of the decorative images with which it is intended to decorate chocolate products.

Some processes have been proposed for the decoration of chocolate products, which envisage making decorative prints, using printing means, to be applied on the chocolate product, the results of which in terms of quality and definition of the images reproduced on the chocolate are only modest.

### Summary of the invention

The object of the present invention is to provide a process for making chocolate products having at least one printed image and presenting the quality typical of a production of "home-made" confectionery, according to a simple and efficient process that enables a mass production suited to an industrial context and that enables high-definition images to be obtained.

In particular, the process according to the invention for making chocolate products having at least one printed image envisages:
- forming a layer of substantially transparent wafer having opposite front and rear sides;
- printing with edible ink said at least one image on the front side of said layer of wafer;
- inserting said layer of wafer having said at least one image within a mould, the rear side of said layer of wafer being set against a portion of wall of said mould;
- spraying a fluid compound containing white chocolate and titanium dioxide on said front side of said layer of wafer;
- pouring liquid chocolate into said mould; and
- once the chocolate is solidified, removing the aforesaid chocolate product obtained from the mould.

According to a preferred embodiment of the invention, the process of printing the aforesaid image on the layer of wafer is carried out using an ink-jet printer.

### Detailed description of the invention

There will now be described, purely by way of example, an embodiment of the process according to the invention.

The process according to the invention envisages making chocolate products of any form, for example bars, having a printed image on an outer side.

A first step of the process according to the invention comprises making a layer of liquid wafer having opposite front and rear sides. The aforesaid layer of wafer, made up, for example, of wheat flour, is obtained according to methodologies known in the art, and not described in detail herein. In particular, the process according to the invention envisages making a layer of liquid wafer having a density of material and a thickness such that, after solidification, it is substantially transparent for the purposes that will be discussed in what follows.

In the case where a number of images on the same chocolate product is envisaged, there may be provided a corresponding number of layers of wafer, each prearranged for a given image.

The process according to the invention can envisage a mass production of the layers of wafer that are associated to the production of a given type of chocolate products.

The layers of wafer are formed on a sheet of film with their rear side in contact with said sheet of film.

The sheet of film and one or more layers of wafer applied thereto are set in an area corresponding to the inlet of a conveyor of a printing means prearranged for printing coloured images on the front side of the individual layers of wafer. According to a preferred embodiment, the printing means is constituted by an ink-jet printer. The ink-jet printer is supplied with coloured ink of an edible type. Since the layers of wafer are substantially transparent, the coloured images printed on their respective front sides are visible also on the corresponding rear sides.

The process according to the present invention envisages, then, an automated production of the decorative images with which the chocolate product will be provided. In particular, with a single printing process using an ink-jet printer, it is possible to obtain the decorative images envisaged for an entire series of a type of chocolate products. In fact, a sheet of film having multiple layers of wafer can be fed continuously through the ink-jet printer, which, jointly, has been programmed, via a processor connected thereto, in such a way as to obtain on the individual layers of wafer the same image provided for a given type of chocolate products. Alternatively, the ink-jet printer can be programmed to obtain on the various layers of wafer different images.

The process according to the invention then envisages the use of a mould in which a predetermined amount of melted chocolate is poured to form the chocolate products. The mould provided according to the invention is a mould of a conventional type suited for being used for the preparation of foodstuffs. Before pouring the melted chocolate into the mould, the layer or the layers of wafer are set in the mould together with the sheet of film, in such a way that this is in contact with the walls of the mould.

Following upon application of the layer or layers of wafer in the mould, a fluid compound is sprayed, containing titanium dioxide and white chocolate on the front side of each layer of wafer. The titanium dioxide has the function of stabilizing and intensifying the colouring of the ink deposited on the wafer. The white chocolate has, instead, the function, not only of forming a homogeneous fluid solution containing titanium dioxide, but also of constituting a background to the coloured image, which determines a contrast with the chocolate, usually dark, which is poured into the mould and constitutes the larger part of the chocolate product.

Once the preparation of the mould as described above has been completed, a predetermined amount of liquid chocolate is poured therein.

The mould filled with liquid chocolate is then placed in a refrigerator to obtain solidification of the chocolate. According to a preferred embodiment, the stay of the mould containing the liquid chocolate in the refrigerator is envisaged for a period of approximately twenty minutes.

During the process of solidification, an adhesion is brought about of the front side of the layer of wafer with the chocolate contained in the mould that is changing from the liquid state into the solid state.

At the end of the solidification step, the product made of chocolate having integrally the decorative image, which has been previously obtained via the printing process, is removed from the mould, and the sheet of film is easily removed so that the product is ready for being packaged.

In the chocolate products made with the process according to the invention, the decorative image does not directly face the external environment so that it cannot undergo any alteration.

The chocolate products made according to the process of the invention can present any shape, and in particular the decorative images can be provided in a region corresponding to any portion of complex shape of the chocolate product. In fact, the layers of wafer according to the present invention can be obtained so as to be flexible and be readily adaptable to shapes of considerable complexity. Accordingly, the printing process can be programmed for providing images suited for being set out on surfaces with a three-dimensional development.

Of course, the details of construction and the embodiments may vary widely with respect to what is described and illustrated herein, without thereby departing from the scope of the present invention, as defined in the ensuing claims.

## Claims

1. A process for making chocolate products having at least one printed image, comprising:
- forming a layer of substantially transparent wafer having opposite front and rear sides;
- printing with edible ink said at least one image on the front side of said layer of wafer;
- inserting said layer of wafer having said at least one image within a mould, the rear side of said layer of wafer being set against a portion of wall of said mould;
- spraying a fluid compound containing white chocolate and titanium dioxide on said front side of said layer of wafer;
- pouring liquid chocolate into said mould;
- once the chocolate is solidified, removing the aforesaid chocolate product obtained from the mould.

2. The process according to Claim 1, **characterized in that** it envisages stay of the mould containing the liquid chocolate within a refrigerator to obtain solidification thereof.

3. The process according to Claim 2, **characterized in that** the stay of said mould within a refrigerator is envisaged for a period of approximately 20 minutes.

4. The process according to Claim 1, **characterized in that** the printing process of said at least one image on the layer of wafer is made with an ink-jet printer.

5. The process according to Claim 1, **characterized in that** prior to the printing process, said layer of wafer is applied on a sheet of transparent film so that the rear side of the layer of wafer is in contact therewith, and **in that** the sheet of transparent film and the layer of wafer applied thereto are then set on a conveyor of a printing means in order to carry out the process of printing of said at least one image.

6. The process according to Claim 5, **characterized in that** the sheet of transparent film and the layer of wafer applied thereto are subsequently inserted into the mould so that the sheet of transparent film is in contact with the wall of the mould.

7. A chocolate product as made according to one or more of Claims 1 to 6.
